# EUROPÄISCHE PATENTSCHRIFT

(11) **EP 0 972 232 B1**
(45) Veröffentlichungstag und Bekanntmachung des Hinweises auf die Patenterteilung: **13.11.2002**
(21) Anmeldenummer: 98924029.6
(22) Anmeldetag: 20.03.1998
(51) Int. Cl.: G05B 19/042

(54) **FREIPROGRAMMIERBARE STEUERUNG**
PROGRAMMABLE CONTROL SYSTEM
SYSTEME DE COMMANDE PROGRAMMABLE PAR L'UTILISATEUR

(30) Priorität: 02.04.1997 DE 19713643
(43) Veröffentlichungstag der Anmeldung: 19.01.2000
(73) Patentinhaber: SIEMENS AKTIENGESELLSCHAFT, 80333 München (DE)
(72) Erfinder: MÜLLER, Jürgen, D-90607 Rückersdorf (DE)
(86) Internationale Anmeldenummer: DE9800822
(87) Internationale Veröffentlichungsnummer: WO98044396

(56) Entgegenhaltungen:
- DE-A- 4 410 775

## Beschreibung

Die vorliegende Erfindung betrifft eine freiprogrammierbare Steuerung zur Steuerung und/oder Überwachung eines technischen Prozesses, die zur Ausführung mindestens einer benutzereditierbaren Task vorgesehen ist.

Eine derartige freiprogrammierbare Steuerung ist beispielsweise die Zentraleinheit einer speicherprogrammierbaren Steuerung, die zur Steuerung und/oder Überwachung eines zu automatisierenden technischen Prozesses mindestens eine benutzereditierbare Task ausführt.

Zur Steuerung und/oder Überwachung eines technischen Prozesses sind häufig Regelungsfunktionen ausführbar. Derartige Regelungsfunktionen stehen dem Anwender der freiprogrammierbaren Steuerung z.B. in einer Bibliothek zur Verfügung. Einfache Regelungsfunktionen sind z.B. Regelungsfunktionen mit dem sogenannten P-Algorithmus, wobei die Regelungsfunktion einen Regler mit Proportionalcharakter nachbildet, mit dem sogenannten PI-Algorithmus, wobei die Regelungsfunktion einen Regler mit Proportional-Integral-Charakter nachbildet oder mit dem sogenannten PID-Algorithmus, wobei die Regelungsfunktion einen Regler mit Proportional-Integral-Differential-Charakter nachbildet.

Der Einsatz derartiger Regelungsfunktionen ist allgemein üblich, so daß sie häufig in Form von Bibliotheken zur Verfügung stehen. Der Benutzer verwendet die Regelungsfunktion und gibt je nach Anwendungsfall lediglich die Parameter, z.B. den Proportionalitätsfaktor oder die Vorhaltezeit vor.

Ein auf diese Weise in einer freiprogrammierbaren Steuerung realisierter Regler ist stets ein zeitdiskret arbeitender Abtastregler. Der jeweilige Regelungsalgorithmus ist auf diese Tatsache abgestellt. Ein Abtastregler wird in einem festgelegten Abtastintervall betrieben, wobei der Regler jeweils zu den Abtastzeitpunkten aktiviert wird. Im Falle eine softwaremäßig realisierten Abtastreglers wird dabei der Regelalgorithmus zu den jeweiligen Abtastzeitpunkten aktiviert, d.h. aufgerufen.

Dazu können die Regelalgorithmen in Form von separat aufrufbaren Teil- oder Unterprogrammen in einer Bibliothek bereit gehalten werden oder vom Anwender entsprechend den jeweiligen Erfordernissen programmiert werden. Der einzelne Algorithmus steht dem Gesamtprogramm dann als separat aufrufbares Unterprogramm zur Verfügung und wird wie ein Baustein in das Gesamtprogramm integriert. Ein solcher separat aufrufbarer Baustein, der eine vorgebbare Funktionalität implementiert, wird im folgenden auch als Funktionstask bezeichnet.

Aus der DE 44 10 775 A ist ein Steuergerät und ein Betriebssystem für ein Steuergerät bekannt. Durch das Betriebssystem wird das Abarbeiten von Prozessen oder Tasks zeitlich koordiniert und gesteuert. Es ist sowohl für die Bearbeitung von Tasks nach einer Stapelverarbeitungsmethode, bei der die Abarbeitung einer laufenden Task nicht unterbrochen werden kann, als auch für die Bearbeitung von Tasks nach einer Verdrängungsmethode, bei der die Abarbeitung einer Task zum Abarbeiten einer anderen Task unterbrochen werden kann, eingerichtet. Die Art der Abarbeitung wird jeder Task als Attribut zugeordnet, durch dass die jeweilige Bearbeitungsmethode festgelegt wird.

Aus der EP 0 445 745 A2 ist eine Steuerung bekannt, die ein Benutzerprogramm ausführt, und bei der zu äquidistanten Zeitpunkten Regelungsfunktionen ausgeführt werden. Die Regelungsfunktion erfolgt entsprechend einer vorgebbaren Übertragungsfunktion, mit der in Abhängigkeit von einem Meßwert ein meßwertbezogenes Datum ermittelbar ist.

In Prozeßsteuerungsgeräten der eingangs beschriebenen Art ist üblicherweise eine zentrale Task vorgesehen, die durch Ausführung entsprechender Steueranweisungen das zyklische Aufrufen z.B. der oben beschriebenen Regelungsalgorithmen gewährleistet. Damit ist z.B., je nach Rechenleistung des Prozeßsteuerungsgerätes, ein zyklischer Aufruf eines bestimmten Regelungsalgorithmus in einem 200 ms-Takt möglich. Diese Zykluszeit entspricht der Abtastzeit und geht als Parameter in den jeweiligen Regelungsalgorithmus ein.

Bei der Erstellung von regelungstechnischen Anwenderprogrammen in freiprogrammierbaren Steuerungen müssen bei Verwendung z.B. der oben beschriebenen Regelungsfunktionen, aber auch zur Verwendung von Filtern, Sollwertgebern, Integrierern, Differenzierern u.s.w. diese in einer definierten zeitlichen Abfolge aufgerufen werden.

Zur Realisierung dieses Aufrufkonzeptes muß häufig eine Zeittaktverwaltung zur gleichmäßigen Zykluszeitauslastung der Steuerung programmiert werden. Dies bedeutet für den Anwender, den Softwareersteller, neben einem erheblichen Arbeitszeitaufwand auch, daß er die Abtastzeiten jeder Funktionstask bestimmen muß, daß er jeder zyklischen Funktionstask der oben beschriebenen Art die Abtastzeit übergeben muß, da diese als Parameter in die jeweiligen Berechnungen einfließt, und daß er sich darüber hinaus um die Zeittaktverwaltung per Programm kümmern muß.

Dies erfordert vom Anwender viel regelungstechnisches Verständnis, das im tradionellen Steuerungsbau oft nicht vorhanden ist bzw. insbesondere bei langsamen Vorgängen, z.B. Temperaturregelungen, ohnehin einen unnötigen Programmier- und Inbetriebnahmeaufwand bedeutet.

Außerdem besteht die Gefahr, daß eine unsachgemäße Zeittaktverwaltung einen Fehlerzustand der freiprogrammierbaren Steuerung hervorruft, der auch noch nach der Inbetriebnahme auftreten kann, da es sich um überlagernde asynchrone Vorgänge mit nicht zu vernachlässigenden Zykluszeitbelastungen handelt, die kaum im Vorfeld zu kalkulieren sind.

Der vorliegenden Erfindung liegt damit die Aufgabe zugrunde, eine freiprogrammierbare Steuerung anzugeben, bei der ein oder mehrere Funktionstasks im zyklischen Teil der benutzereditierbaren Task aufrufbar sind und die zur Berechnung der mathematischen oder logischen Funktion, die dem Algorithmus der jeweiligen Funktionstask zugrundeliegt, notwendige Abtastzeit in jeder einzelnen Funktionstask ermittelbar ist und damit als Parameter für die logische Funktion zur Verfügung steht.

Diese Aufgabe wird durch eine freiprogrammierbare Steuerung zur Steuerung und/oder Überwachung eines technischen Prozesses gelöst, die zur Ausführung mindestens einer benutzeredidierbaren Task vorgesehen ist, insbesondere eine Zentraleinheit einer speicherprogrammierbaren Steuerung,
- wobei durch die benutzereditierbare Task mindestens eine Funktionstask aufrufbar ist,
- wobei die Funktionstask
   -- zur Aufnahme mindestens eines Meßwertes aus dem technischen Prozeß und
   -- zur Ermittlung mindestens eines meßwertbezogenen Datums gemäß einer vorgebbaren, durch mindestens einen Parameter bestimmten mathematischen oder logischen Funktion
   vorgesehen ist,
- wobei das meßwertbezogene Datum beim Aufruf der Funktionstask ermittelbar ist,
- wobei durch die Funktionstask der Zeitpunkt des Aufrufs ermittelbar ist,
- wobei eine Zeitdifferenz zwischen aktuellem Aufruf und einem vorhergehenden Aufruf ermittelbar ist,
- wobei die Zeitdifferenz ein Parameter der mathematischen oder logischen Funktion ist.

Wenn die Zeitdifferenz zwischen aktuellem Aufruf und einem vorhergehenden Aufruf durch die Funktionstask selbst ermittelbar ist, ist es nicht erforderlich, der Funktionstask diese Zeitdifferenz als Parameter zu übergeben. Dies führt zu einer Rechenzeitentlastung der freiprogrammierbaren Steuerung und insbesondere zu einer Entlastung des Stacks, auf dem die Daten während der Parameterübergabe zwischengespeichert werden.

Bei freiprogrammierbaren Steuerungen, die zur Steuerung und/oder Überwachung eines technischen Prozesses mindestens eine benutzereditierbare Task ausführen, ist üblicherweise eine sogenannte Realzeitausführung vorgesehen, das heißt, innerhalb gewisser Grenzen wird durch das Betriebssystem oder eine der benutzereditierbaren Task unterlagerte Task sichergestellt, daß Aktionen zu bestimmten, vorgebbaren Zeitpunkten initiiert werden. Im vorliegenden Fall ist die im folgenden als zentrale Task bezeichnete Task zum Beispiel die vorstehend beschriebene, der benutzereditierbaren Task unterlagerte Task oder eine Task, die durch das spezielle Betriebssystem aufgerufen wird.

Wenn die benutzereditierbare Task durch diese zentrale Task steuerbar ist, ist es z.B. möglich, die benutzereditierbare Task zyklisch innerhalb fester Zeitintervalle aufzurufen. Wenn aus einer derart gesteuerten benutzereditierbaren Task die vorstehend beschriebenen Funktionstasks aufgerufen werden, ist durch das festgelegte Aufrufraster der benutzereditierbaren Task auch ein in gewissen Grenzen festgelegtes Aufrufraster der Funktionstask gewährleistet, so daß sich damit in etwa wieder die Verhältnisse einstellen, die bereits beim Aufruf der Funktionstask durch die zentrale Task gemäß dem Stand der Technik bestehen, bei jedoch deutlich verringertem Programmier- und Planungsaufwand sowie reduzierter Rechenzeitbelastung der freiprogrammierbaren Steuerung.

Wenn neben der benutzereditierbaren Task mindestens eine Zeitindextask vorgesehen ist, wobei die Zeitindextask durch die zentrale Task aufrufbar ist und wobei die Zeitindextask bei jedem Aufruf den Inhalt eines Zeitindexregisters inkrementiert, kann mit dem Inhalt des Zeitindexregisters eine gemeinsame Zeitbasis für sämtliche Funktionstasks zur Verfügung gestellt werden.

Die Zeitindextask wird zu vorgebbaren Zeitpunkten von der zentralen Task aufgerufen, wobei die Zeitindextask bei jedem Aufruf zumindest den Inhalt eines Zeitindexregisters inkrementiert. Die Aufrufzeitpunkte der Zeitindextask richten sich nach der kleinsten sogenannten Streckenzeitkonstante des zu steuernden und/oder überwachenden technischen Prozesses. Der Abstand zwischen zwei Aufrufzeitpunkten der Zeitindextask wird daher üblicherweise kleiner als die kleinste Streckenzeitkonstante des technischen Prozesses gewählt werden.

Der Abstand zwischen zwei Aufrufzeitpunkten der Zeitindextask muß wiederum so groß gewählt werden, daß die Zeitspanne zwischen einem ersten Überlaufen des Zeitindexregisters und einem zweiten Überlaufen des Zeitindexregisters größer, insbesondere deutlich größer, als die größte erfaßte Streckenzeitkonstante ist.

Wenn die Zeitindextask den Inhalt des Zeitindexregisters bei jedem Aufruf inkrementiert, ergibt sich bei einem über der Zeit aufgetragenen Inhalt des Zeitindexregisters eine Sägezahnfunktion, da unmittelbar nach einem Registerüberlauf der Registerinhalt zu Null wird und folglich daraufhin wieder von Null ausgehend inkrementiert wird. Das Zeitindexregister ist ein sogenanntes globales Register, so daß der Inhalt des Zeitindexregisters sowohl vom Gesamtprogramm als auch von sämtlichen Unterprogrammen, insbesondere von den Funktionstasks, die von der freiprogrammierbaren Steuerung ausgeführt werden, ermittelbar ist.

Wenn die Zeitindextask in einem vorgebbaren, äquidistanten Zeitraster durch die zentrale Task aufrufbar ist, ergibt sich aufgrund des Inhalts des Zeitindexregisters eine lineare Zeitbasis für das Gesamtprogramm, die aufrufbaren Unterprogramme, insbesondere die Funktionstasks.

Wenn die Funktionstask zur Ermittlung ihres Aufrufzeitpunktes den Inhalt des Zeitindexregisters ermittelt, ergibt sich eine besonders einfache Ermittlung des Aufrufzeitpunktes, der zudem, wie oben beschrieben, auf die gemeinsame Zeitbasis des Gesamtprogramms, der aufrufbaren Unterprogramme, insbesondere der Funktionstask, bezogen ist.

Der vorliegenden Erfindung liegt ferner die Aufgabe zugrunde, ein Verfahren zum Aufruf einer Funktionstask in einer frei programmierbaren Steuerung, insbesondere einer Zentraleinheit einer speicherprogrammierbaren Steuerung zur Steuerung und/oder Überwachung eines technischen Prozesses, die zur Ausführung mindestens einer benutzereditierbaren Task vorgesehen ist, anzugeben, mit dem die Funktionstasks im zyklischen Teil der benutzereditierbaren Task aufgerufen werden und bei dem die zur Berechnung der mathematischen oder logischen Funktion, die dem Algorithmus der jeweiligen Funktionstask zugrunde liegt, notwendige Abtastzeit in jeder einzelnen Funktionstask ermittelt wird und damit als Parameter für die logische Funktion zur Verfügung steht.

Diese Aufgabe wird durch ein Verfahren zum Aufruf einer Funktionstask in einer freiprogrammierbaren Steuerung, insbesondere einer Zentraleinheit einer speicherprogrammierbaren Steuerung, zur Steuerung und/oder Überwachung eines technischen Prozesses, die zur Ausführung mindestens einer benutzereditierbaren Task vorgesehen ist, dadurch gelöst,
- daß die Funktionstask durch die benutzereditierbare Task aufgerufen wird,
- daß die Funktionstask
   -- zur Aufnahme mindestens eines Meßwertesaus dem technischen Prozeß und
   -- zur Ermittlung mindestens eines meßwertbezogenen Datums gemäß einer vorgebbaren, durch mindestens einen Parameter bestimmten mathematischen oder logischen Funktion
   vorgesehen ist,
- daß das meßwertbezogene Datum beim Aufruf der Funktionstask ermittelt wird,
- daß durch die Funktionstask der Zeitpunkt des Aufrufs ermittelt wird,
- daß eine Zeitdifferenz zwischen aktuellem Aufruf und einem vorhergehenden Aufruf ermittelt wird,
- daß die Zeitdifferenz ein Parameter der mathematischen oder logischen Funktion ist.

Weitere Vorteile und erfinderische Einzelheiten ergeben sich anhand der Figuren in Verbindung mit den Unteransprüchen. Im einzelnen zeigen:
- Figur 1 und 3: ein Zeitdiagramm,
- Figur 2 und 4: eine Aufrufhierarchie,
- Figur 5: einen Funktionsverlauf

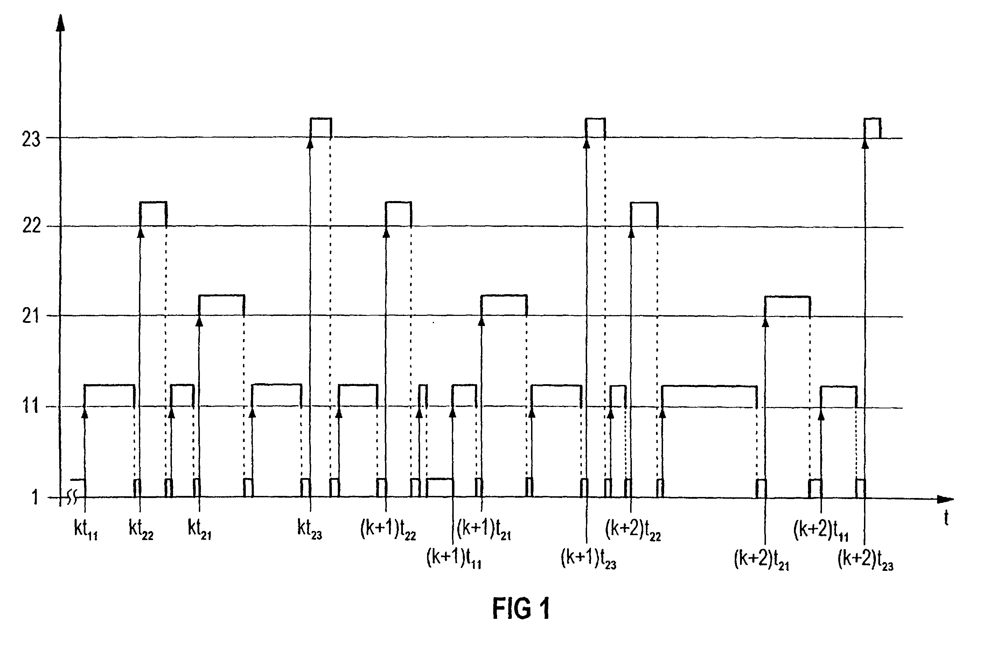

Figur 1 zeigt ein Zeitdiagramm für eine benutzereditierbare Task 11, die von einer zentralen Task 1 aufgerufen wird, wobei die zentrale Task 1 ferner die Funktionstask 21, 22 und 23 zu vorgebbaren Zeitpunkten aufruft und dazu die Ausführung der benutzereditierbaren Task 11 unterbricht.

Gemäß Figur 1 wird zum Zeitpunkt kt₁₁ die benutzereditierbare Task 11 durch die zentrale Task 1 aufgerufen. Zum Zeitpunkt kt₂₁ unterbricht die zentrale Task 1 die benutzereditierbare Task 11, um die Funktionstask 22 aufzurufen. Nach Beendigung der Funktionstask 22 wird die Kontrolle kurzfristig an die zentrale Task 1 zurückgegeben, die aufgrund der ihr zur Verfügung stehenden Daten und Parameter ermittelt, daß die benutzereditierbare Task 1 noch lauffähig ist und entsprechend die benutzereditierbare Task 11 erneut aktiviert.

Zum Zeitpunkt kt₂₁ wird die benutzereditierbare Task 11 erneut von der zentralen Task 1 unterbrochen, um eine Ausführung der Funktionstask 21 zu ermöglichen. Nach Beendigung der Funktionstask 21 wird die Kontrolle erneut kurzfristig an die zentrale Task 1 zurückgegeben, die wiederum feststellt, daß die benutzereditierbare Task 11 noch lauffähig ist und entsprechend die benutzereditierbare Task 11 erneut aktiviert.

Zum Zeitpunkt kt₂₃ unterbricht die zentrale Task 1 die benutzereditierbare Task 11 abermals, um die Funktionstask 23 aufzurufen. Nach Beendigung der Funktionstask 23 geht die Kontrolle kurzfristig wieder an die zentrale Task 1 zurück, die ermittelt, daß die benutzereditierbare Task 11 noch lauffähig ist und daher entsprechend die benutzereditierbare Task 11 erneut aktiviert.

Zum Zeitpunkt (k + 1)t₂₂ wird die benutzereditierbare Task 11 erneut von der zentralen Task 1 unterbrochen, um die Funktionstask 22 erneut aufzurufen. Nach Beendigung der erneuten Ausführung der Funktionstask 22 gibt die zentrale Task 1 kurzfristig die Kontrolle nochmals an die benutzereditierbare Task 11 ab, die noch stets lauffähig ist.

Nach Beendigung der benutzereditierbaren Task 11 geht die Kontrolle an die zentrale Task 1 zurück, die zum Zeitpunkt (k + 1)t₁₁ die benutzereditierbare Task 11 erneut startet.

Zum Zeitpunkt (k + 1)t₂₂ unterbricht die zentrale Task 1 die erneute Ausführung der benutzereditierbaren Task 11, um die Funktionstask 21 erneut zu starten. Nach Beendigung der Funktionstask 21 reaktiviert die zentrale Task 1 erneut die unterbrochene benutzereditierbare Task 11. Nach diesem Schema wird beim im Stand der Technik bekannten Aufrufverfahren eine benutzereditierbare Task 11 zur Ausführung von Funktionstasks 21, 22, 23 jeweils zu deren Ausführungszeitpunkten (k + x)t₂₁, (k + x)t₂₂, (k + x)t₂₃ unterbrochen.

Wichtig ist, festzustellen, daß die Ausführung der Funktionstasks 21, 22, 23 asynchron zur Ausführung der benutzereditierbaren Task 11 erfolgt. Dies ist durch die Tatsache bedingt, daß sämtliche Tasks, also sowohl die benutzereditierbare Task 11 als auch die Funktionstask 21, 22, 23 durch die zentrale Task 1 aufgerufen werden.

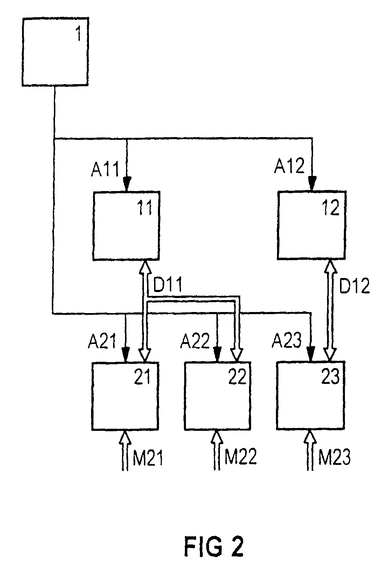

Dieses Abhängigkeitsverhältnis stellt Figur 2 nochmals exemplarisch dar. Die zentrale Task 1 ruft zu vorgebbaren Zeitpunkten (k + x)t₁₁ bzw (k + x)t₁₂ die benutzereditierbaren Tasks 11 bzw. 12 auf. Unabhängig vom Aufruf dieser benutzereditierbaren Tasks 11, 12 steuert die zentrale Task 1 auch den Aufruf der Funktionstasks 21, 22, 23 zu den jeweiligen Aufrufzeitpunkten (k + x)t₂₁, (k + x)t₂₂ bzw. (k + x)t₂₃.

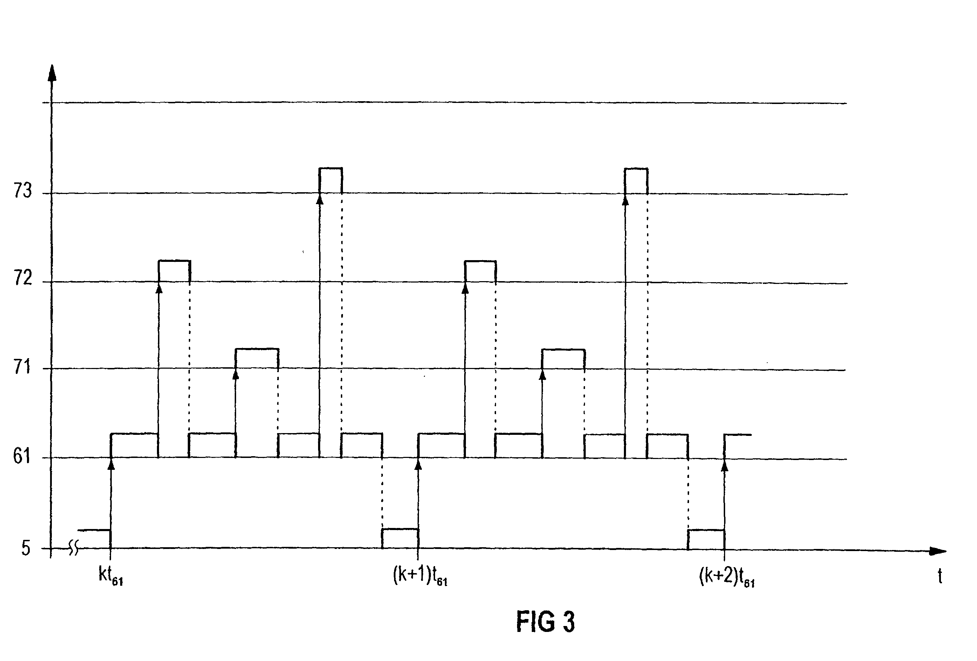

Demgegenüber erfolgt gemäß der Erfindung der Aufruf der Funktionstasks 71, 72, 73 durch die benutzereditierbare Task 61. Die sich damit ergebenden Zusammenhänge sind in einem Zeitdiagramm in Figur 3 dargestellt.

Die zentrale Task 5 ruft die benutzereditierbare Task zum Aufrufzeitpunkt kt₆₁ auf. Die Funktionstasks 71, 72, 73 werden unmittelbar aus der benutzereditierbaren Task c1 aufgerufen. Die Aufrufzeitpunkte (k + x)t₇₁, (k + x)t₇₂, (k + x)t₇₃ ergeben sich damit aus der Position der jeweiligen Aufrufanweisungen innerhalb der Steueranweisungen der benutzereditierbaren Task 61. Es ist damit also möglich, die Funktionstasks 71, 72, 73 innerhalb der benutzereditierbaren Task genau dann aufzurufen, wenn das von den jeweiligen Funktionstasks 71, 72, 73 gelieferte meßwertbezogene Datum D71, D72, D73 unmittelbar benötigt wird.

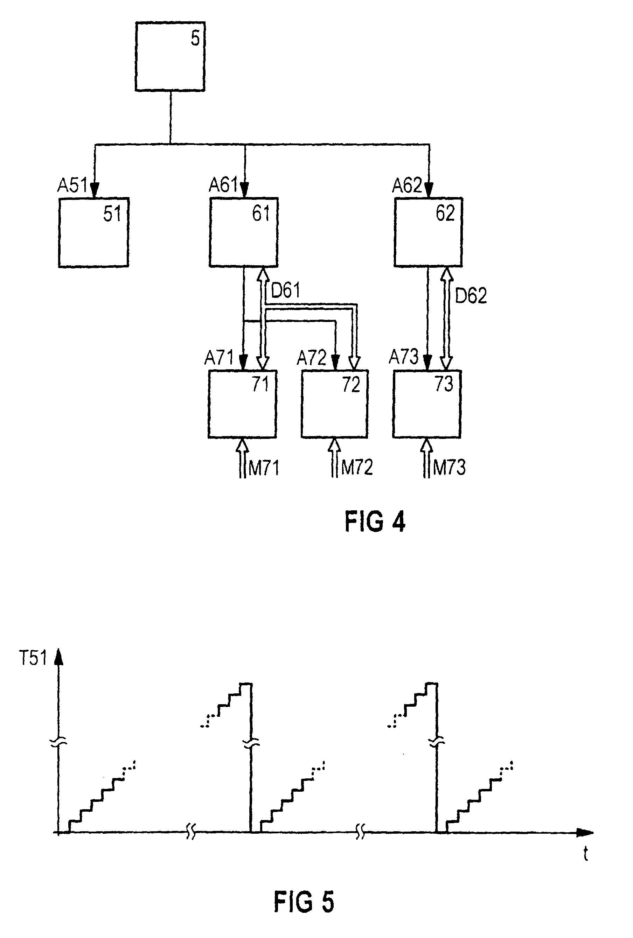

Die sich damit ergebenden einfacheren Aufrufverhältnisse sind in Figur 4 nochmals dargestellt. Die zentrale Task 5 ruft die benutzereditierbaren Tasks 61, 62 zu den jeweiligen Aufrufzeitpunkten (k + x)t₆₁ bzw. (k + x)t₆₂ auf. Innerhalb der Steueranweisungen dieser Funktionstasks finden sich jetzt Aufrufbefehle, die die Funktionstasks 71, 72, 73 aufrufen. Exemplarisch ist in Figur 4 der Fall dargestellt, daß die benutzereditierbare Task 61 die Funktionstask 71 und 72 aufruft, die benutzereditierbare Task 62 hingegen die Funktionstask 73 aufruft. Vom exemplarischen Beispiel abweichende Konstellationen sind selbstverständlich denkbar.

Während beim Zeitdiagramm gemäß Figur 1 der Abstand zwischen den jeweiligen Aufrufen einer Funktionstask 21, 22, 23 stets gleich bleibt, mithin die Funktionstasks 21, 22, 23 stets in äquidistanten Zeitintervallen aufgerufen werden, ist dies für den Aufruf der Funktionstasks 71, 72, 73 gemäß der vorliegenden Erfindung nicht garantierbar.

Wie beschrieben, erfolgt gemäß der Erfindung der Aufruf der Funktionstask 71, 72, 73 durch entsprechende Anweisung der jeweiligen benutzereditierbaren Task 61, 62. Das heißt, die Aufrufzeitpunkte der Funktionstask 71, 72, 73 hängen von der Rechenzeit, die zur Bearbeitung und Ausführung der in der benutzereditierbaren Task 61, 62 enthaltenen Steueranweisungen benötigt werden, ab.

Wird beispielsweise vor dem Aufruf der Funktionstask 73 durch die benutzereditierbare Task 61 eine Iteration mit variabler Iterationstiefe durchgeführt, kann die Iterationstiefe bei einem ersten Aufruf der benutzereditierbaren Task 61 geringer sein als bei einem zweiten Aufruf der benutzereditierbaren Task 61, sich mithin also auch der Aufrufzeitpunkt der Funktionstask 72 beim zweiten Aufruf der benutzereditierbaren Task 61 durch die aufgrund der Erhöhung der Iterationstiefe erhöhte Rechenzeit nach hinten verlagern.

Die jeweiligen Funktionstasks 71, 72, 73 werden also beim Aufruf gemäß der Erfindung nicht in äquidistanten Zeitintervallen aufgerufen. Wenn von den Funktionstasks 71, 72, 73, wie vorstehend beschrieben, ein Regelungsalgorithmus durchgeführt wird, in den Meßwerte M71, M72, M73, die von einem zu steuernden und/oder zu überwachenden technischen Prozeß TP geliefert werden, eingehen, ist auch der Abstand zwischen den jeweiligen Aufrufen der Funktionstasks ein variabler Parameter des Regelungalgorithmus, der die jeweilige Abtastzeit beschreibt.

Zur Ermittlung der variierenden Abtastzeiten ist es möglich, einen Parameter als Maß für den aktuellen Stand der Systemuhrzeit zu ermitteln.

Wird dieser Parameter innerhalb der Funktionstask 71, 72, 73 zwischengespeichert, so kann beim nächsten Aufruf der Funktionstask 71, 72, 73 anhand der Differenz zwischen diesem zwischengespeicherten Wert und dem neu übergebenen Parameter die aktuelle Abtastzeit übermittelt werden.

Ebenso ist es denkbar, daß die Funktionstask 71, 72, 73 um Anweisungen ergänzt werden, mit denen der aktuelle Zustand der Systemuhrzeit ermittelt wird. Auch in diesem Falle wird der jeweils aktuell ermittelte Zeitwert innerhalb der Funktionstask zwischengespeichert, um beim nächsten Aufruf der Funktionstask 71, 72, 73 anhand dieses zwischengespeicherten Wertes die Zeitdifferenz ermitteln zu können.

Häufig ist es jedoch (rechenzeit-)aufwendig, aus zwei Zeitinformationen, die z.B. die Tageszeit in Stunden, Minuten und Sekunden angeben, eine Zeitdifferenz zu ermitteln. Zu diesem Zweck könnten z.B. die beiden Tageszeiten auf Sekunden umgerechnet werden, wofür jedoch diverse Multiplikationen und Additionen erforderlich wären. Dies verbraucht Rechenzeit, die besser den jeweiligen Applikationen, z.B. der benutzereditierbaren Task 61, 62 oder den Funktionstasks 71, 72, 73 zur Verfügung gestellt werden kann.

Daher ist es z.B. vorteilhaft, gemäß der Erfindung ein Zeitindexregister T51 vorzusehen, dessen Inhalt eine Zeitinformation repräsentiert.

Zu diesem Zweck ist gemäß einer vorteilhaften Ausgestaltung der Erfindung vorgesehen, daß die zentrale Task 5 in äquidistanten Abständen eine Zeitindextask 51 aufruft, wobei die Zeitindextask 51 bei jedem Aufruf den Inhalt eines Zeitindexregisters T51 inkrementiert. Der Inhalt des Zeitindexregisters T51 ist für die Funktionstask 71, 72, 73 ermittelbar und kann so zur Bestimmung der jeweiligen Abtastzeit herangezogen werden.

Beispielsweise ermittelt die Funktionstask 72 bei einem Aufruf den Inhalt des Zeitindexregisters T51 und speichert den Wert. Beim nächsten Aufruf der Funktionstask 72 ermittelt die Funktionstask 72 erneut den Inhalt des Zeitindexregisters T51 und kann anhand der Differenz zwischen dem aktuellen Inhalt des Zeitindexregisters T51 und dem gespeicherten Wert, der den Inhalt des Zeitindexregisters T51 beim vorigen Aufruf der Funktionstasks 72 repräsentiert, ein Maß für die Zeitspanne zwischen den beiden aufeinanderfolgenden Aufrufen, mithin also die Abtastzeit ermitteln.

Wenn das Zeitindexregister T51 z.B. ein 16 Bit breites Register ist, ist der größte Wert, der im Zeitindexregister speicherbar ist, der Wert 65535. Ist im Zeitindexregister T51 bereits diese maximal mögliche Wert gespeichert, so führt ein nochmaliges Inkrementieren des Inhalts des Zeitindexregisters T51 zu einem sogenannten Registerüberlauf. Für den Inhalt des Zeitindexregisters T51 bedeutet dies ein Rücksetzen auf den Wert Null. Ausgehend von diesem Wert Null kann bei folgenden Aufrufen der Zeitindextask 51 der Inhalt des Zeitindexregisters T51 erneut inkrementiert werden, bis zum folgenden Registerüberlauf. Über der Zeit aufgetragen ergibt sich damit für den Inhalt des Zeitindexregisters T51 eine Sägezahnfunktion, wie in Figur 5 dargestellt.

Wenn während zweier aufeinanderfolgender Aufrufe einer Funktionstask 71, 72, 73 noch kein Registerüberlauf des Zeitindexregisters T51 stattgefunden hat, ist der Inhalt des Zeitindexregisters beim aktuellen Aufruf der jeweiligen Funktionstask 71, 72, 73 größer als beim jeweils vorhergehenden Aufruf. Das Maß für die Zeitdifferenz berechnet sich mithin durch einfache Subtraktion des in der Funktionstask 71, 72, 73 jeweils zwischengespeicherten Werts, der den Inhalt des Zeitindexregisters T51 zum vorhergehenden Aufrufzeitpunkt repräsentiert, vom Inhalt des Zeitindexregisters T51 zum aktuellen Aufrufzeitpunkt.

Findet dagegen zwischen zwei aufeinanderfolgenden Aufrufen einer Funktionstask 71, 72, 73 ein Überlauf des Zeitindexregisters T51 statt, so ist der Wert des Zeitindexregisters T51 zum aktuellen Aufrufzeitpunkt kleiner als der Inhalt des Zeitindexregisters T51 zum vorhergehenden Aufrufzeitpunkt. Vor der Ermittlung der Abtastzeit in der jeweiligen Funktionstask 71, 72, 73 wird also ermittelt, ob diese Konstellation vorliegt, d.h., ob der Inhalt des Zeitindexregisters T51 zum aktuellen Aufrufzeitpunkt kleiner als der zwischengespeicherte Wert ist. Ist dies der Fall, so wird zum aktuellen Inhalt des Zeitindexregisters T51 der größte Wert, der im Zeitindexregister T51 speicherbar ist, hinzuaddiert; in diesem Falle also 65535. Für die graphische Darstellung gemäß Figur 5 bedeutet dies veranschaulicht, daß zwei Dreiecke des Sägezahns einfach so verschoben werden, daß sich eine lineare, nicht unterbrochene Steigung ergibt. Mit einem auf diese Weise korrigierten Inhalt des Zeitindexregisters T51 ist in bekannter Weise durch Subtraktion die Abtastzeit ermittelbar.

Abschließend läßt sich die vorliegende Erfindung wie folgt kurz darstellen:

Wenn der Aufruf von Funktionstasks, mit denen z.B. Regelungsfunktionen implementiert sind, nicht mehr durch eine zentrale Task, also z.B. den Scheduler eines Realzeitbetriebssystems, sondern stattdessen durch die jeweiligen benutzeredidierbaren Tasks, in denen die von den Funktionstasks gelieferten Meßwerte verarbeitet werden, erfolgt, ist der Softwareersteller von komplexen Organisationsaufgaben bei der Softwareerstellung entlastet. Da bei den sich ergebenden nicht äquidistanten Aufrufen der Funktionstasks die Abtastzeit z.B. eines Regelungsalgorithmus keine Konstante mehr ist, muß die jeweils gültige Abtastzeit den jeweiligen Algorithmen der Funktionstasks als Parameter übergeben werden. Die Abtastzeit kann jedoch besonders einfach ermittelt werden, wenn die Funktionstasks bei jedem Aufruf einen Zeitwert ermitteln und aus der Differenz zwischen aktuellem und vorhergehenden Zeitwert die Abtastzeit selbst bestimmen. Die Ermittlung eines Zeitwertes wiederum ist besonders einfach möglich, wenn dazu ein Zeitindexregister abgefragt wird, das von einer durch die zentrale Task zyklisch aufgerufenen Zeitindextask bei jedem Aufruf inkrementiert wird.

## Patentansprüche

1. Freiprogrammierbare Steuerung insbesondere Zentraleinheit einer speicherprogrammierbaren Steuerung, zur Steuerung und/oder Überwachung eines technischen Prozesses (TP), die zur Ausführung mindestens einer benutzereditierbaren Task (61, 62) vorgesehen ist,
- wobei durch die benutzereditierbare Task (61, 62) mindestens eine Funktionstask (71, 72, 73) aufrufbar ist,
- wobei die Funktionstask (71, 72, 73)
-- zur Aufnahme mindestens eines Meßwertes (M71, M72, M73) aus dem technischen Prozeß (TP) und
-- zur Ermittlung mindestens eines meßwertbezogenen Datums (D71, D72, D73) gemäß einer vorgebbaren, durch mindestens einen Parameter bestimmten mathematischen oder logischen Funktion
vorgesehen ist,
- wobei das meßwertbezogene Datum (D71, D72, D73) beim Aufruf (A71, A72, A73) der Funktionstask (71, 72, 73) ermittelbar ist,
- wobei durch die Funktionstask (71, 72, 73) der Zeitpunkt (T_{A}) des Aufrufs (A71, A72, A73) ermittelbar ist,
- wobei eine Zeitdifferenz (T_{Δ}) zwischen aktuellem Aufruf (A71, A72, A73) und einem vorhergehenden Aufruf ermittelbar ist,
- wobei die Zeitdifferenz (T_{Δ}) ein Parameter der mathematischen oder logischen Funktion ist.

2. Freiprogrammierbare Steuerung nach Anspruch 1, **dadurch gekennzeichnet, daß** die Zeitdifferenz (T_{Δ}) zwischen aktuellem Aufruf (A71, A72, A73) und einem vorhergehenden Aufruf durch die Funktionstask (71, 72, 73) ermittelbar ist.

3. Freiprogrammierbare Steuerung nach Anspruch 1 oder 2, **dadurch gekennzeichnet, daß** die Ausführung der benutzereditierbaren Task (61, 62) durch eine zentrale Task (5) steuerbar ist.

4. Freiprogrammierbare Steuerung nach Anspruch 3, **dadurch gekennzeichnet, daß** neben der benutzereditierbaren Task (61, 62) mindestens eine Zeitindextask (51) vorgesehen ist, wobei die Zeitindextask (51) durch die zentrale Task (5) aufrufbar ist und wobei die Zeitindextask (51) bei jedem Aufruf den Inhalt eines Zeitindexregisters (T51) inkrementiert.

5. Freiprogrammierbare Steuerung nach Anspruch 4, **dadurch gekennzeichnet, daß** die Zeitindextask (51) in einem vorgebbaren, äquidistanten Zeitraster durch die zentrale Task (5) aufrufbar ist.

6. Freiprogrammierbare Steuerung nach Anspruch 4 oder 5, **dadurch gekennzeichnet, daß** die Funktionstask (71, 72, 72) zur Ermittlung ihres Aufrufzeitpunktes (T_{A}) den Inhalt des Zeitindexregisters (T₅₁) ermittelt.

7. Verfahren zum Aufruf einer Funktionstask in einer freiprogrammierbaren Steuerung, insbesondere einer Zentraleinheit einer speicherprogrammierbaren Steuerung, zur Steuerung und/oder Überwachung eines technischen Prozesses (TP), die zur Ausführung mindestens einer benutzereditierbaren Task (61, 62) vorgesehen ist,
- wobei die Funktionstask (71, 72, 73) durch die benutzereditierbare Task (61, 62) aufgerufen wird,
- wobei die Funktionstask (71, 72, 73)
-- zur Aufnahme mindestens eines Meßwertes (M71, M72, M73) aus dem technischen Prozeß (TP) und
-- zur Ermittlung mindestens eines meßwertbezogenen Datums (D71, D72, D73) gemäß einer vorgebbaren, durch mindestens einen Parameter bestimmten mathematischen oder logischen Funktion
vorgesehen ist,
- wobei das meßwertbezogene Datum (D71, D72, D73) beim Aufruf (A71, A72, A73) der Funktionstask (71, 72, 73) ermittelt wird,
- wobei durch die Funktionstask (71, 72, 73) der Zeitpunkt (T_{A}) des Aufrufs (A71, A72, A73) ermittelt wird,
- wobei eine Zeitdifferenz (T_{Δ}) zwischen aktuellem Aufruf (A71, A72, A73) und einem vorhergehenden Aufruf ermittelt wird,
- wobei die Zeitdifferenz (T_{Δ}) ein Parameter der mathematischen oder logischen Funktion ist.

8. Verfahren nach Anspruch 7, **dadurch gekennzeichnet, daß** die Zeitdifferenz (T_{Δ}) zwischen aktuellem Aufruf (A71, A72, A73) und einem vorhergehenden Aufruf durch die Funktionstask (71, 72, 73) ermittelt wird.

9. Verfahren nach Anspruch 7 oder 8, **dadurch gekennzeichnet, daß** die Ausführung der benutzereditierbaren Task (61, 62) durch eine zentrale Task (5) gesteuert wird.

10. Verfahren nach Anspruch 9, **dadurch gekennzeichnet, daß** neben der benutzereditierbaren Task (61, 62) eine Zeitindextask (51) vorgesehen ist, wobei die Zeitindextask (51) durch die zentrale Task (5) aufgerufen wird und wobei die Zeitindextask (51) bei jedem Aufruf den Inhalt eines Zeitindexregisters (T51) inkrementiert.

11. Verfahren nach Anspruch 10, **dadurch gekennzeichnet, daß** die Zeitindextask (51) in einem vorgebbaren, äquidistanten Zeitraster durch die zentrale Task (5) aufgerufen wird.

12. Verfahren nach Anspruch 10 oder 11, **dadurch gekennzeichnet, daß** die Funktionstask (71, 72, 73) zur Ermittlung ihres Aufrufzeitpunktes (T_{A}) den Inhalt des Zeitindexregisters (T51) ermittelt.

## Claims

1. Programmable controller, in particular a central processing unit of a programmable logic controller, for controlling and/or monitoring a technical process (TP), which controller is provided for performing at least one user-adaptable task (61, 62),
- the user-adaptable task (61, 62) being capable of calling at least one operating task (71, 72, 73),
- the operating task (71, 72, 73) being provided
-- for receiving at least one measured value (M71, M72, M73) from the technical process (TP) and
-- for determining at least one piece of data (D71, D72, D73), referring to a measured value, on the basis of a specifiable mathematical or logic function defined by at least one parameter,
- it being possible to determine the piece of data (D71, D72, D73), referring to a measured value, when the operating task (71, 72, 73) is called (A71, A72, A73),
- the operating task (71, 72, 73) being able to determine the instant (T_{A}) of the call (A71, A72, A73),
- it being possible to determine a time difference (T_{Δ}) between the current call (A71, A72, A73) and a preceding call,
- the time difference (T_{Δ}) being a parameter of the mathematical or logic function.

2. Programmable controller according to Claim 1, **characterised in that** the time difference (T_{Δ}) between the current call (A71, A72, A73) and a preceding call can be determined by the operating task (71, 72, 73).

3. Programmable controller according to Claim 1 or 2, **characterised in that** the performance of the user-adaptable task (61, 62) can be controlled by a central task (5).

4. Programmable controller according to Claim 3, **characterised in that** at least one time index task (51) is provided in addition to the user-adaptable task (61, 62), it being possible for the time index task (51) to be called by the central task (5), and the time index task (51) incrementing the contents of a time index register (T51) with each call.

5. Programmable controller according to Claim 4, **characterised in that** the central task (5) can call the time index task (51) in a specifiable, equidistant time frame.

6. Programmable controller according to Claim 4 or 5, **characterised in that**, in order to determine its call instant (T_{A}), the operating task (71, 72, 72) determines the contents of the time index register (T₅₁).

7. Method for calling an operating task in a programmable controller, in particular a central processing unit of a programmable logic controller, for controlling and/or monitoring a technical process (TP), which controller is provided for performing at least one user-adaptable task (61, 62),
- the operating task (71, 72, 73) being called by the user-adaptable task (61, 62),
- the operating task (71, 72, 73) being provided
-- for receiving at least one measured value (M71, M72, M73) from the technical process (TP) and
-- for determining at least one piece of data (D71, D72, D73), referring to a measured value, on the basis of a specifiable mathematical or logic function defined by at least one parameter,
- the piece of data (D71, D72, D73) referring to a measured value being determined when the operating task (71, 72, 73) is called (A71, A72, A73),
- the operating task (71, 72, 73) determining the instant (T_{A}) of the call (A71, A72, A73),
- a time difference (T_{Δ}) being determined between the current call (A71, A72, A73) and a preceding call,
- the time difference (T_{Δ}) being a parameter of the mathematical or logic function.

8. Method according to Claim 7, **characterised in that** the time difference (T_{Δ}) between the current call (A71, A72, A73) and a preceding call is determined by the operating task (71, 72, 73).

9. Method according to Claim 7 or 8, **characterised in that** the performance of the user-adaptable task (61, 62) is controlled by a central task (5).

10. Method according to Claim 9, **characterised in that** a time index task (51) is provided in addition to the user-adaptable task (61, 62), the time index task (51) being called by the central task (5), and the time index task (51) incrementing the contents of a time index register (T51) with each call.

11. Method according to Claim 10, **characterised in that** the central task (5) calls the time index task (51) in a specifiable, equidistant time frame.

12. Method according to Claim 10 or 11, **characterised in that**, in order to determine its call instant (T_{A}), the operating task (71, 72, 73) determines the contents of the time index register (T51).

## Revendications

1. Commande programmable par l'utilisateur, notamment unité centrale d'une commande programmable en mémoire, qui est destinée à la commande et/ou à la surveillance d'un processus technique (TP) et qui est prévue pour l'exécution d'au moins une tâche (61, 62) pouvant être éditée par l'utilisateur,
- dans laquelle au moins une tâche fonctionnelle (71, 72, 73) peut être appelée par la tâche (61, 62) pouvant être éditée par l'utilisateur,
- dans laquelle la tâche fonctionnelle (71, 72, 73) est prévue
-- pour la réception d'au moins une valeur mesurée (M71, M72, M73) en provenance du processus technique (TP) et
-- pour la détermination d'au moins une donnée (D71, D72, D73) se rapportant à la valeur mesurée selon une fonction mathématique ou logique pouvant être prescrite et déterminée par au moins un paramètre,
- dans laquelle la donnée (D71, D72, D73) se rapportant à la valeur mesurée peut être déterminée lors de l'appel (A71, A72, A73) de la tâche fonctionnelle (71, 72, 73),
- dans laquelle l'instant (T_{A}) de l'appel (A71, A72, A73) peut être déterminé par la tâche fonctionnelle (71, 72, 73),
- dans laquelle une différence de temps (T_{Δ}) entre l'appel actuel (A71, A72, A73) et un appel précédent peut être déterminée,
- dans laquelle la différence de temps (T_{Δ}) est un paramètre de la fonction mathématique ou logique.

2. Commande programmable par l'utilisateur selon la revendication 1, **caractérisée par le fait que** la différence de temps (T_{Δ}) entre l'appel actuel (A71, A72, A73) et un appel précédent peut être déterminée par la tâche fonctionnelle (71, 72, 73).

3. Commande programmable par l'utilisateur selon la revendication 1 ou 2, **caractérisée par le fait que** l'exécution de la tâche (61, 62) pouvant être éditée par l'utilisateur peut être commandée par une tâche centrale (5).

4. Commande programmable par l'utilisateur selon la revendication 3, **caractérisée par le fait que**, outre la tâche (61, 62) pouvant être éditée par l'utilisateur, il est prévu au moins une tâche d'index temporel (51), la tâche d'index temporel (51) pouvant être appelée par la tâche centrale (5) et la tâche d'index temporel (51) incrémentant à chaque appel le contenu d'un registre d'index temporel (T51).

5. Commande programmable par l'utilisateur selon la revendication 4, **caractérisée par le fait que** la tâche d'index temporel (51) peut être appelée par la tâche centrale (5) selon une trame temporelle équidistante qui peut être prescrite.

6. Commande programmable par l'utilisateur selon la revendication 4 ou 5, **caractérisée par le fait que** la tâche fonctionnelle (71, 72, 73) détermine le contenu du registre d'index temporel (T51) en vue de la détermination de son instant d'appel (T_{A}).

7. Procédé pour l'appel d'une tâche fonctionnelle dans une commande programmable par l'utilisateur, notamment dans une unité centrale d'une commande programmable en mémoire, qui est destinée à la commande et/ou à la surveillance d'un processus technique (TP) et qui est prévue pour l'exécution d'au moins une tâche (61, 62) pouvant être éditée par l'utilisateur,
- dans lequel la tâche fonctionnelle (71, 72, 73) est appelée par la tâche (61, 62) pouvant être éditée par l'utilisateur,
- la tâche fonctionnelle (71, 72, 73) est prévue
-- pour la réception d'au moins une valeur mesurée (M71, M72, M73) en provenance du processus technique (TP) et
-- pour la détermination d'au moins une donnée (D71, D72, D73) se rapportant à la valeur mesurée selon une fonction mathématique ou logique pouvant être prescrite et déterminée par au moins un paramètre,
- dans lequel la donnée (D71, D72, D73) se rapportant à la valeur mesurée est déterminée lors de l'appel (A71, A72, A73) de la tâche fonctionnelle (71, 72, 73),
- dans lequel l'instant (T_{A}) de l'appel (A71, A72, A73) est déterminé par la tâche fonctionnelle (71, 72, 73),
- dans lequel une différence de temps (T_{Δ}) entre l'appel actuel (A71, A72, A73) et un appel précédent est déterminée,
- dans lequel la différence de temps (T_{Δ}) est un paramètre de la fonction mathématique ou logique.

8. Procédé selon la revendication 7, **caractérisé par le fait que** la différence de temps (T_{Δ}) entre l'appel actuel (A71, A72, A73) et un appel précédent peut être déterminée par la tâche fonctionnelle (71, 72, 73).

9. Procédé selon la revendication 7 ou 8, **caractérisé par le fait que** l'exécution de la tâche (61, 62) pouvant être éditée par l'utilisateur est commandée par une tâche centrale (5).

10. Procédé selon la revendication 9, **caractérisé par le fait que**, outre la tâche (61, 62) pouvant être éditée par l'utilisateur, il est prévu au moins une tâche d'index temporel (51), la tâche d'index temporel (51) étant appelée par la tâche centrale (5) et la tâche d'index temporel (51) incrémentant à chaque appel le contenu d'un registre d'index temporel (T51).

11. Procédé selon la revendication 10, **caractérisé par le fait que** la tâche d'index temporel (51) est appelée par la tâche centrale (5) selon une trame temporelle équidistante qui peut être prescrite.

12. Procédé selon la revendication 10 ou 11, **caractérisé par le fait que** la tâche fonctionnelle (71, 72, 73) détermine le contenu du registre d'index temporel (T51) en vue de la détermination de son instant d'appel (T_{A}).
